(19) **Europäisches Patentamt**
**European Patent Office**
**Office européen des brevets**

(11) **EP 2 048 491 A1**

(12) **EUROPEAN PATENT APPLICATION**

(43) Date of publication:
**15.04.2009 Bulletin 2009/16**

(51) Int Cl.:
*G01N 21/41* [(2006.01)]     *G01B 11/06* [(2006.01)]
*C12M 1/34* [(2006.01)]

(21) Application number: **08017583.9**

(22) Date of filing: **07.10.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **10.10.2007   JP 2007264447**

(71) Applicant: **Olympus Corporation**
**Tokyo 151-0072 (JP)**

(72) Inventors:
• **Fukuda, Hiroshi**
**Hino-shi**
**Tokyo 191-0053 (JP)**

• **Kobayashi, Masayuki**
**Hachioji-shi**
**Tokyo 192-0023 (JP)**
• **Sakamoto, Takamitsu**
**Hino-shi**
**Tokyo 191-0041 (JP)**

(74) Representative: **von Hellfeld, Axel**
**Wuesthoff & Wuesthoff**
**Patent- und Rechtsanwälte**
**Schweigerstrasse 2**
**81541 München (DE)**

(54) **Cellular thickness measurement method**

(57)     To enable precise measurement of a cellular thickness distribution regardless of changes in the refractive index of cell (S). Two-dimensional distribution of phase information is obtained, in a state where a first culture solution (L1) having a first refractive index is stored so as to completely immerse cells (S) adhered onto a bottom face (1a) of a culture vessel (1), by transmitting light (L) of a wavelength, and by photographing the transmitted light (L). Next, two-dimensional distribution of phase information is obtained, in a state where a second culture solution (L2) having a second refractive index is stored to have a depth to completely immerse the cells (S) in the culture vessel (1), by transmitting light (L), and by photographing the transmitted light (L). Next, respective average values of the phase information are calculated. Next, the refractive index of the cell (S) is estimated. Next, the thickness dimension is calculated using the refractive index.

FIG. 1A

EP 2 048 491 A1

**Description**

BACKGROUND OF THE INVENTION

1. FIELD OF THE INVENTION

The present invention relates to a cellular thickness measurement method.

2. DESCRIPTION OF RELATED ART

Conventionally, as a method for extracting a cell image from a whole image including cultured cells, a method described in Japanese Unexamined Patent Application, Publication No. 2005-218379 has been known, for example.
This method is to conduct image subtraction using two contrast images having a phase difference of opposite sign upon interference of light beams for observation of an object. These two contrast images are from two defocus images which have been captured under microscopy with respect to a focus image of cell(s) by shifting the focal point in opposite directions along the optical axis.
Moreover, a method for measuring a thickness distribution of an object using a focus image and two defocus images has also been known (for example, refer to Australian Patent Application Publication No. 2004201109A1). A method for measuring a thickness distribution of an object using interference fringes resulting from interference between light which is transmitted through or is reflected from the object and reference light has also been known.
However, such conventional methods for measuring the thickness distribution are to calculate the cellular thickness dimension from phase information under an assumption that the refractive index of cells is already known. However, in reality, it should be considered that the refractive index of cells contained in a culture solution in a culture vessel varies because the state of these cells is changed during culture. For this reason, errors are included in the cellular thickness dimension that has been calculated under the assumption that the refractive index of cells is already known, which leads to a concern regarding inability in precise calculation.

BRIEF SUMMARY OF THE INVENTION

The present invention takes the above situation into consideration with an object of providing a cellular thickness measurement apparatus capable of precisely measuring the cellular thickness distribution regardless of changes in the refractive index of cell(s) with the progress of culture or regardless of a cell strain having an unknown refractive index.
In order to achieve the above object, the present invention provides the following solutions.
The present invention provides a method for measuring a thickness dimension of a cell being cultured in an adhesive manner onto a culture surface of a culture vessel, wherein the cellular thickness measurement method comprises:

a first photographing step of obtaining two-dimensional distribution of phase information, in a state where a first culture solution having an already known first refractive index is stored to have a depth greater than the thickness dimensions of the cell in the culture vessel, by transmitting light of a predetermined wavelength through the cell and the culture solution, and by photographing the transmitted light;
a second photographing step of obtaining two-dimensional distribution of phase information, in a state where a second culture solution having an already known second refractive index differing from the first culture solution is stored to have a depth greater than the thickness dimensions of the cell in the culture vessel, by transmitting light of the wavelength through the cell and the culture solution, and by photographing the transmitted light;
a phase average calculation step of calculating respective cellular phase average values using the two types of phase information that have been obtained in the first and second photographing steps;
a refractive index estimation step of estimating a refractive index of the cell based on the ratio between the average values of the two types of phase information that have been calculated in the phase average calculation step;
a thickness dimension calculation step of calculating the cellular thickness dimension with use of the refractive index of the cell that has been estimated in the refractive index estimation step.

According to the present invention, in the first photographing step, the phase information image in which light having its phase changed in accordance with the refractive indexes of the cell and the first culture solution has been photographed, is captured, by injecting light of a predetermined wavelength either downward or upward through the culture vessel made of a transparent material, and by detecting the light transmitted downward or upward through the culture vessel, the cell being cultured in an adhesive manner onto the culture surface of the culture vessel, and the first culture solution covering thereover. Moreover, in the second photographing step, the first culture solution is replaced with the second culture solution having its refractive index differing from the first culture solution, and then the phase information image is obtained in the same manner as that of the first photographing step.

Moreover, in the phase average calculation step, the average values of the two types of respective maximum phase of the cell are calculated from the respective phase information images that have been captured in the first and second photographing steps. These two types of phase information can be respectively determined by multiplying the difference in the refractive index between the cell and the culture solution, by the light wavelength, and by the thickness dimension of the cell. Therefore, in the refractive index estimation step, the refractive index of the cell can be estimated by determining the ratio between the average values of these two types of phase information, and by using the already known refractive indexes of the first culture solution and the second culture solution. Accordingly, by the thickness dimension calculation step, the thickness dimension of each position of the cell can be precisely calculated on the basis of the refractive index of the cell that has been estimated in the refractive index estimation step, the light wavelength, the refractive indexes of the culture solutions, and the phase information at each position.

That is to say, according to the present invention, regardless of changes during a culturing process in the refractive index of cell(s) due to changes in the state of the cell(s) or regardless of a cell strain having an unknown refractive index, the cellular thickness dimension is determined by precisely estimating the refractive index of the cell (s). Therefore, the cellular thickness dimension can be more precisely measured as compared to methods for calculating the thickness dimension under an assumption that the refractive index of cells is continuously constant.

In the above invention, the second culture solution may also be prepared by pouring another culture solution having a different refractive index into the first culture solution.

By so doing, the second culture solution having a different refractive index can be stored in the culture vessel without withdrawing the first culture solution from the culture vessel, and the process flow can be shortened so that the cellular thickness dimension can be measured in a short time.

The present invention demonstrates an effect in which the cellular thickness distribution can be precisely measured regardless of changes in the refractive index of cell(s) with the progress of culture or regardless of a cell strain having an unknown refractive index.

BRIEF DESCRIPTION OF THE SEVERAL VIEWS OF THE DRAWINGS

FIG. 1A is an explanatory diagram of the measurement principle in a cellular thickness measurement method according to one embodiment of the present invention.
FIG. 1B is a first phase information image captured in a first photographing step in the cellular thickness measurement method according to one embodiment of the present invention.
FIG. 1C is a second phase information image captured in a second photographing step in the cellular thickness measurement method according to one embodiment of the present invention.
FIG. 2 is a flowchart showing the cellular thickness measurement method of FIG. 1A.
FIG. 3A is an explanatory diagram of the measurement principle in a modified example of the cellular thickness measurement method of FIG. 1A.
FIG. 3B is a first phase information image captured in the first photographing step in the modified example of the cellular thickness measurement method of FIG. 1A.
FIG. 3C is a second phase information image captured in the second photographing step in the modified example of the cellular thickness measurement method of FIG. 1A.
FIG. 4 is a flowchart showing the cellular thickness measurement method of FIG. 3A.

DETAILED DESCRIPTION OF THE INVENTION

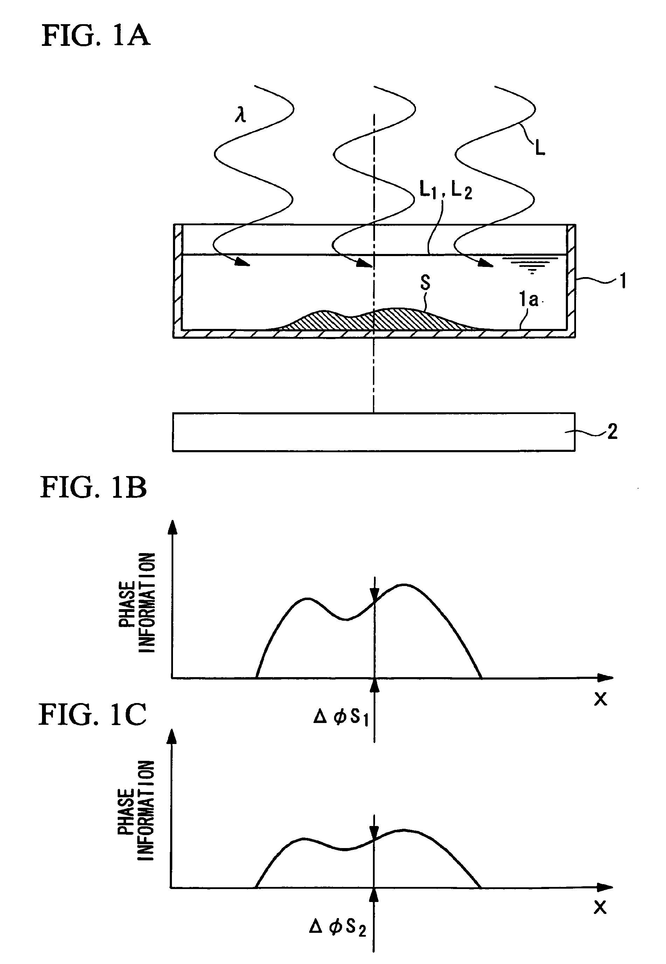

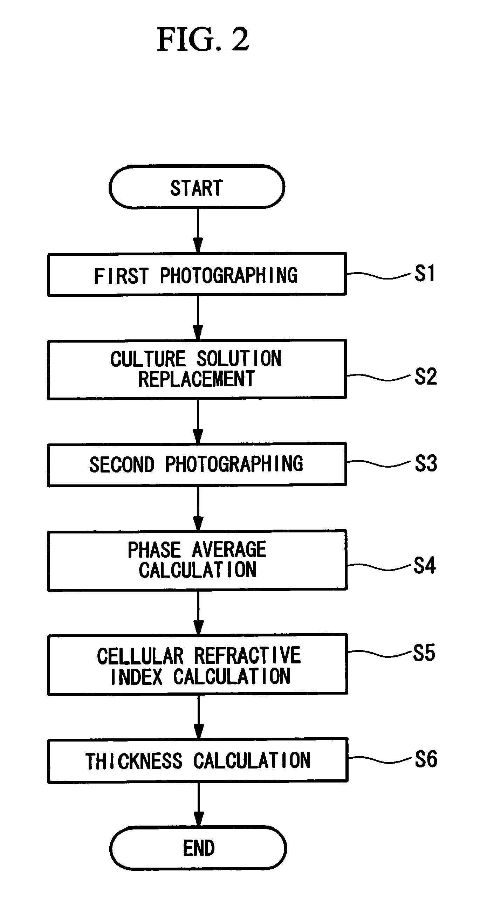

Hereunder is a description of a cellular thickness measurement method according to one embodiment of the present invention, with reference to FIG. 1A to FIG. 1C, and FIG. 2.

As shown in FIG. 2 and FIG. 1A, the cellular thickness measurement method according to the present embodiment comprises: a first photographing step S1 of capturing a phase information image in a state where a first culture solution L1 having an already known refractive index is stored so as to allow adhesive cells S to be adhered onto a culture surface (bottom face) 1a of a transparent Petri dish-like culture vessel 1 and to completely immerse the cells S therein; a culture solution replacement step S2 of replacing the culture solution L1 with a second culture solution L2; a second photographing step S3 of capturing a phase information image while storing the second culture solution L2 having an already known refractive index so as to completely immerse the cells S; a phase average calculation step S4 of calculating respective cellular phase average values using the two types of phase information; a refractive index calculation step S5 of estimating the refractive index of the cells S based on the ratio between the average values of the two types of phase information; and a thickness calculation step S6 of calculating the thickness dimension of each position of the cells S based on the estimated refractive index.

The first photographing step S1 is performed such that, as shown in FIG. 1A: at any point in time during the culturing process in which the first culture solution L1 is stored, light L of a predetermined wavelength is transmitted through the culture solution L1, the cells S, and the culture vessel 1; and the transmitted light L is photographed by a two-dimensional imager 2 such as CCD. The photographing step S1 is designed to capture a first phase information image which shows two-dimensional distribution of phase information, by a conventional method using a focus image and two defocus images.

Here, the first phase information image includes an offset portion depending on the depth dimension of the first culture solution L1 and other unnecessary information, and therefore the offset portion and other unnecessary information are to be removed. For example, the phase information image captured in the first photographing step S1 is binarized to thereby divide into areas including the cells S and others. Then, the phase in the area not including the cells S is subtracted from the whole of the first phase information image. By so doing, as shown in FIG. 1B, the phase in the area not including the cells S becomes zero, to thereby create a new first phase information image having a phase distribution only in the area including the cells S. FIG. 1B shows first phase information $\Delta\Phi S1$ in a specific position of the cells S.

The culture solution replacement step S2 is performed by discharging the stored first culture solution L1, washing out the first culture solution L1, and supplying the second culture solution L2 having an already known refractive index which differs from the first culture solution L1.

The second photographing step S3 is designed to capture a second phase information image which shows two-dimensional distribution of phase information, under the same conditions as those of the first photographing step except for the difference between the culture solutions L1 and L2. Moreover, the captured second phase information image is subjected to image processing, to thereby create a new second phase information image in which the phase in the offset portion depending on the depth of the culture solution L2 and other unnecessary information has been removed, as shown in FIG. 1C. FIG. 1C shows second phase information $\Delta\Phi S2$ in a specific position of the cells S.

The phase average calculation step S4 is designed to calculate the average values $\Delta\Phi 1a$ and $\Delta\Phi 2$ of phase information in the area including the cells S respectively in the first phase information image and the second phase information image.

Here, it is assumed that the refractive index of the first culture solution L1 is nL1, the refractive index of the second culture solution L2 is nL2, the average value of the thickness dimension of the cells S is dSa, the refractive index of the cells S is nS, the wavelength of light L to be transmitted is $\lambda$, the average value of the first phase information is $\Delta\Phi 1a$, and the average value of the second phase information is $\Delta\Phi 2a$. Then, relations of the following equation (1) and equation (2) are established.

$$\Delta\Phi 1a = (nL1-nS) \times \lambda \times dSa\ldots(1)$$

$$\Delta\Phi 2a = (nL2-nS) \times \lambda \times dSa\ldots(2)$$

In the cellular refractive index calculation step S5, the both sides of the equation (1) are divided by the both sides of the equation (2) to thereby obtain the following equation (3).

$$\Delta\Phi 1a/\Delta\Phi 2a = (nL1-nS)/(nL2-nS)\ldots(3)$$

Through transformation of the equation (3), the refractive index nS of the cells S can be calculated by the equation (4).

$$nS = (nL1\times\Delta\Phi 2a-nL2\times\Delta\Phi 1a)/(\Delta\Phi 2a-\Delta\Phi 1a)\ldots(4)$$

Accordingly, with use of the refractive index nS of the cells S that has been calculated by the equation (4), the thickness calculation step S6 is to calculate the thickness dimension of each position of the cells S by the equation (5).

$$dS = \Delta\Phi 1/((nL1-nS)\times\lambda)\ldots(5)$$

In this way, according to the cellular thickness measurement method of the present embodiment, on the basis of two phase information images that have been obtained by photographing while replacing two types of culture solutions L1 and L2 having different refractive indexes, the refractive index nS of the cells S is estimated. Then, with use of thus estimated refractive index nS of the cells S, the thickness dimension of each position of the cells S is calculated. Accordingly, an advantage is provided in which, regardless of changes during a culturing process in the refractive index nS of the cells S due to a variety of changes in the state of the cells S, the thickness dimension of each position of the cells S can be precisely calculated.

In the present embodiment, between the first photographing step S1 and the second photographing step S3, the first culture solution L1 having the already known refractive index nL1 was replaced with the second culture solution L2 having the different already known refractive index nL2; however, instead of this, the second culture solution L2 having the different already known refractive index nL2 may also be prepared by adding another culture solution having a different already known refractive index to the first culture solution L1. By so doing, the step of removing the first culture solution L1 and the step of washing out the first culture solution L1 can be made unnecessary, and the second culture solution L2 can be stored in the culture vessel in a short time.

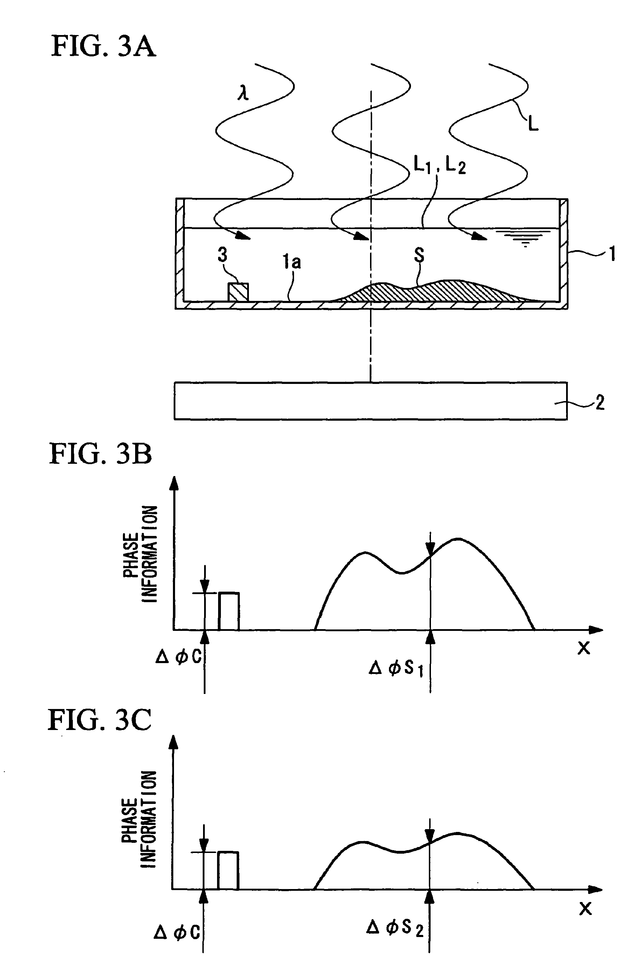

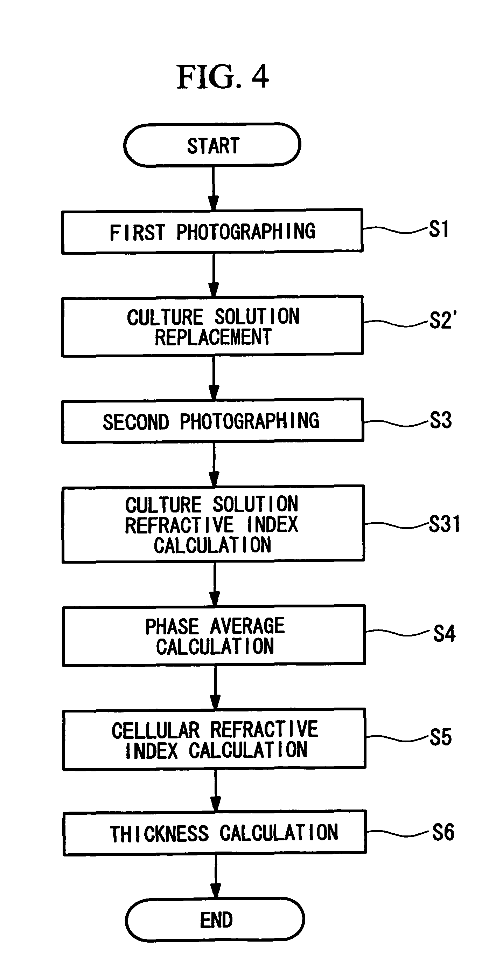

However, it is sometimes difficult to precisely adjust the refractive index nL2 by mixing. Therefore, it may be such that, as shown in FIG. 3A to FIG. 3C, and FIG. 4, the refractive index of the second culture solution L2 having an unknown refractive index that has been prepared in a culture solution addition step S2' is measured, and the phase information of the cells S is measured with use of thus measured refractive index.

Specifically, as shown in FIG. 3A, a reference substance 3 having an already known refractive index and an already known thickness dimension is arranged on the culture surface 1a, and the second phase information image is captured by transmitting light L of a predetermined wavelength through the cells S, the reference substance 3, and the culture solution L2.

The second phase information image that has been captured in the second photographing step S3 can be regarded as, for example, a one-dimensional distribution of masses of phase information as shown in FIG. 3C, by extracting phase information along an arbitrary straight line passing through the reference substance 3 in that second phase information image.

The culture solution refractive index calculation step S31 is designed to calculate the refractive index nL2 of the culture solution L2 with use of the phase information of the reference substance 3 and positions therearound.

Specifically, it is assumed that the depth of the culture solution L2 is dL, the refractive index of the culture solution L2 is nL, the thickness dimension of the reference substance 3 is dC, the refractive index of the reference substance 3 is nC, the wavelength of light to be transmitted is $\lambda$, the phase information at a position of the reference substance 3 is $\Delta\Phi C$, and the phase information therearound is $\Delta\Phi L$. At a position of the reference substance 3, the reference substance 3 accounts for the thickness dimension dC of the depth dL of the culture solution L2. At positions therearound, the culture solution L2 fills the full depth dL.

Accordingly, a position of the reference substance 3 and positions therearound have different refractive indexes depending on the thickness dimension dC of the reference substance 3. Therefore, a phase difference $\Delta\Phi 1 = (\Delta\Phi C-\Delta\Phi L)$ occurs in accordance with the difference in the refractive index $\Delta n1 = (nC-nL)$ and the thickness dimension dC. That is to say,

$$\Delta\Phi 1 = \Delta n1 \times \lambda \times dC\ldots(6).$$

The phase difference $\Delta\Phi 1$, the refractive index nC of the reference substance 3, the light wavelength $\lambda$, and the thickness dimension dC of the reference substance 3 are already known, and thus the equation (6) is transformed such that:

$$nL = nC-\Delta\Phi 1/(\lambda\times dC)\ldots(7).$$

The unknown refractive index nL2 of the culture solution L2 can be calculated by the above equation.

Then, with use of thus calculated refractive index nL2 of the culture solution L2, the thickness dimension of each position of the cells S can be more precisely measured in the same manner as the above.

In the first photographing step, the refractive index nL1 may also be calculated in the same manner as that of the culture solution refractive index calculation step.

In the present embodiment, the respective cellular refractive indexes are estimated by the respective cellular phase average values. However, the average value of the cellular refractive index in a cell colony may also be estimated using the average values of respective maximum phase of the cell.

It is desirable that the former is used, if a number of cell strains are mixing. It is desirable that the later is used, if culture cells of a single cell strain are observed. However, the present invention should not be limited to these cases.

In the present embodiment, in the phase average calculation step, the refractive index of cells is obtained from average values of respective two types of phase information of the cells that have been obtained with different refractive indexes. However, the refractive indexes at respective positions of individual cells may also be obtained by providing a mechanism capable of identifying individual cells before and after exchanging the culture solution, or the like.

**Claims**

1.  A method for measuring a thickness dimension of a cell being cultured in an adhesive manner onto a culture surface of a culture vessel, wherein the cellular thickness measurement method comprises:

    a first photographing step of obtaining two-dimensional distribution of phase information, in a state where a first culture solution having an already known first refractive index is stored to have a depth greater than the thickness dimensions of the cell in the culture vessel, by transmitting light of a predetermined wavelength through the cell and the culture solution, and by photographing the transmitted light;
    a second photographing step of obtaining two-dimensional distribution of phase information, in a state where a second culture solution having an already known second refractive index differing from the first culture solution is stored to have a depth greater than the thickness dimensions of the cell in the culture vessel, by transmitting light of the wavelength through the cell and the culture solution, and by photographing the transmitted light;
    a refractive index estimation step of estimating a refractive index of the cell using phase information that have been obtained in the first and second photographing steps;
    a thickness dimension calculation step of calculating the cellular thickness dimension with use of the refractive index of the cell that has been estimated in the refractive index estimation step.

2.  A cellular thickness measurement method according to claim 1, wherein the refractive index estimation step comprises:

    a phase average calculation step, wherein a first average value of first phase information on a phase of a each cell, the first phase information being obtained in the first photographing step, and a second average value of second phase information on a phase of each cell, the second phase information being obtained in the second photographing step, are calculated, and
    a refractive index estimation step, wherein the refractive index of the cell is estimated based on the ratio between the first average value and the second average value.

3.  A cellular thickness measurement method according to claim 1, wherein the refractive index estimation step comprises:

    a phase average calculation step, wherein a first average value of first maximum phase information on a maximum phase of a each cell, the first maximum phase information being obtained in the first photographing step, and a second average value of second maximum phase information on a maximum phase of each cell, the second maximum phase information being obtained in the second photographing step, are calculated, and
    a refractive index estimation step, wherein the refractive index of the cell is estimated based on the ratio between the first average value and the second average value.

4.  A cellular thickness measurement method according to any one of claims 1 to 3, wherein the second culture solution is prepared by pouring another culture solution having a different refractive index into the first culture solution.

## FIG. 1A

## FIG. 1B

## FIG. 1C

# FIG. 2

```
        ┌─────────────┐
        │    START    │
        └─────────────┘
               │
               ▼
   ┌──────────────────────┐
   │ FIRST PHOTOGRAPHING  │────── S1
   └──────────────────────┘
               │
               ▼
   ┌──────────────────────┐
   │  CULTURE SOLUTION    │────── S2
   │    REPLACEMENT       │
   └──────────────────────┘
               │
               ▼
   ┌──────────────────────┐
   │ SECOND PHOTOGRAPHING │────── S3
   └──────────────────────┘
               │
               ▼
   ┌──────────────────────┐
   │    PHASE AVERAGE     │────── S4
   │    CALCULATION       │
   └──────────────────────┘
               │
               ▼
   ┌──────────────────────┐
   │ CELLULAR REFRACTIVE  │────── S5
   │  INDEX CALCULATION   │
   └──────────────────────┘
               │
               ▼
   ┌──────────────────────┐
   │ THICKNESS CALCULATION│────── S6
   └──────────────────────┘
               │
               ▼
        ┌─────────────┐
        │     END     │
        └─────────────┘
```

FIG. 3A

FIG. 3B

FIG. 3C

# FIG. 4

```
        ┌─────────────┐
        │    START    │
        └─────────────┘
               │
               ▼
   ┌───────────────────────┐
   │  FIRST PHOTOGRAPHING   │──── S1
   └───────────────────────┘
               │
               ▼
   ┌───────────────────────┐
   │   CULTURE  SOLUTION    │──── S2'
   │     REPLACEMENT        │
   └───────────────────────┘
               │
               ▼
   ┌───────────────────────┐
   │  SECOND PHOTOGRAPHING  │──── S3
   └───────────────────────┘
               │
               ▼
   ┌───────────────────────┐
   │   CULTURE  SOLUTION    │
   │   REFRACTIVE  INDEX    │──── S31
   │      CALCULATION       │
   └───────────────────────┘
               │
               ▼
   ┌───────────────────────┐
   │    PHASE  AVERAGE      │──── S4
   │      CALCULATION       │
   └───────────────────────┘
               │
               ▼
   ┌───────────────────────┐
   │  CELLULAR REFRACTIVE   │──── S5
   │   INDEX CALCULATION    │
   └───────────────────────┘
               │
               ▼
   ┌───────────────────────┐
   │ THICKNESS CALCULATION  │──── S6
   └───────────────────────┘
               │
               ▼
        ┌─────────────┐
        │     END     │
        └─────────────┘
```

Europäisches
Patentamt

European
Patent Office

Office européen
des brevets

# EUROPEAN SEARCH REPORT

Application Number

EP 08 01 7583

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | R. BARER: "Refractometry and Interferometry of Living Cells" JOURNAL OF THE OPTICAL SOCIETY OF AMERICA, vol. 47, no. 6, June 1957 (1957-06), pages 545-556, XP002511707 * page 555, right-hand column - page 556, left-hand column * ----- | 1-4 | INV. G01N21/41 G01B11/06 C12M1/34 |
| Y | C. L. CURL ET AL.: "Single Cell Volume Measurement by Quantitative Phase Microscopy (QPM) : A Case Study of Erythrocyte Morphology" CELLULAR PHYSIOLOGY AND BIOCHEMISTRY, vol. 17, 2006, pages 193-200, XP002511706 Karger AG, Basel, CH * page 555 - page 556; figure 4 * ----- | 1-4 | |
| A | B. RAPPAZ ET AL.: "Measurement of the integral refractive index and dynamic cell morphometry of living cells with digital holographic microscopy" OPTICS EXPRESS, vol. 13, no. 23, 14 November 2005 (2005-11-14), pages 9361-9373, XP002511708 * paragraphs [0002] - [0004] * ----- | 1-4 | |
| A | CURL CLAIRE L ET AL: "QUANTITATIVE PHASE MICROSCOPY: A NEW TOOL FOR MEASUREMENT OF CELL CULTURE GROWTH AND CONFLUENCY IN SITU" PFLUEGERS ARCHIV: EUROPEAN JOURNAL OF PHYSIOLOGY, SPRINGER VERLAG, BERLIN, DE, vol. 448, no. 4, 17 February 2004 (2004-02-17), pages 462-468, XP008074000 ISSN: 0031-6768 * page 464 * ----- | 1-4 | TECHNICAL FIELDS SEARCHED (IPC) C12M |

-/--

The present search report has been drawn up for all claims

| Place of search | Date of completion of the search | Examiner |
|---|---|---|
| Berlin | 23 January 2009 | Brison, Olivier |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt
European
Patent Office
Office européen
des brevets

**EUROPEAN SEARCH REPORT**

Application Number

EP 08 01 7583

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | C. L. CURL ET AL.: "Refractive Index Measurement in Viable Cells Using Quantitative Phase-Amplitude Microscopy and Confocal Microscopy" CYTOMETRY PART A, vol. 65A, 2005, pages 88-92, XP002511709 * the whole document * | 1-4 | |
| A | WO 03/012407 A (IATIA IMAGING PTY LTD [AU]; ALLMAN BRENDAN EDWARD [AU]; NUGENT KEITH []  13 February 2003 (2003-02-13) * the whole document * | 1-4 | |
| A | C. L. CURL ET AL.: "Quantitative Phase Microscopy : A New Tool for Investigating the Structure and Function of Unstained Live Cells" CLINICAL AND EXPERIMENTAL PHARMACOLOGY AND PHYSIOLOGY, vol. 31, no. 12, December 2004 (2004-12), pages 896-901, XP002511710 * page 900 * | 1-4 | TECHNICAL FIELDS SEARCHED (IPC) |

The present search report has been drawn up for all claims

| Place of search | Date of completion of the search | Examiner |
|---|---|---|
| Berlin | 23 January 2009 | Brison, Olivier |

EPO FORM 1503 03.82 (P04C01)

## ANNEX TO THE EUROPEAN SEARCH REPORT
## ON EUROPEAN PATENT APPLICATION NO.

EP 08 01 7583

This annex lists the patent family members relating to the patent documents cited in the above-mentioned European search report.
The members are as contained in the European Patent Office EDP file on
The European Patent Office is in no way liable for these particulars which are merely given for the purpose of information.

23-01-2009

| Patent document cited in search report | Publication date | Patent family member(s) | Publication date |
|---|---|---|---|
| WO 03012407 A | 13-02-2003 | NONE | |

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005218379 A
- AU 2004201109 A1